# EUROPEAN PATENT APPLICATION

(11) **EP 0 896 493 A2**
(43) Date of publication of application: **10.02.1999**
(21) Application number: 98114743.2
(22) Date of filing: 05.08.1998
(51) Int. Cl.: H04Q 7/38, H04Q 7/32

(54) **Communication apparatus connectable to a plurality of different communication systems**

(30) Priority: 06.08.1997 JP 211484/97; 29.12.1997 JP 368154/97
(71) Applicant: NEC CORPORATION, Tokyo (JP)
(72) Inventor: Miyashita, Toshikazu, Minato-ku, Tokyo (JP); Arimitsu, Kazuhiro, Minato-ku, Tokyo (JP)
(74) Representative: Baronetzky, Klaus, Dipl.-Ing.

(57) **Abstract**

When a portable telephone has its power source turned on with a battery thereof remaining in a fully charged state, the telephone first start receipt stand-by with a PDC (Personal Digital Cellular) system. Then, the voltage of the battery is detected at preselected intervals. When the battery voltage drops below a first preselected value, the PDC system is automatically replaced with a PHS (Personal Handy phone System). As a result, the telephone starts receipt stand-by with the PHS. When the user of the telephone originates a call, but the detected battery voltage is short of a voltage necessary for the telephone to be connected via the PDC system, the telephone is automatically connected for call origination via the PHS. Subsequently, when the battery voltage drops to a second preselected value, an alert is output, and on the elapse of a preselected period of time communication is forcibly ended.

## Description

### BACKGROUND OF THE INVENTION

### Field of the Invention

The present invention relates to a communication apparatus capable of selecting any one of a plurality of different communication systems.

### Description of the Related Art

Some different technologies are available with a portable telephone or similar mobile communication terminal for preventing the terminal from being fully shut down due to the drop of battery capacity. For example, Japanese laid-open patent application heisei 3-201830 discloses a radio pager including a first and a second low voltage detection circuit for respectively detecting the stable operation voltage and limit operation voltage of a radio section. The outputs of the two low voltage detection circuits are combined in order to produce an alert in various ways. This allows the user of the pager to accurately see the remaining capacity of a battery powering the pager.

Japanese laid-open patent application heisei 3-145342 teaches a low voltage alarm circuit for a radio pager. When the battery voltage of the pager drops to a preselected value, the low voltage alarm circuit produces an alarm while deactivating the receiving function of the pager. On the elapse of a preselected period of time, the alarm circuit stops the alarm in order to save the capacity of the battery. A period of time elapsed since the deactivation of the receiving function is displayed and can be easily recognized by the user of the pager.

Japanese laid-open patent application heisei 8-251098 proposes a portable telephone including a main battery and an auxiliary battery. Usually, the main battery feeds a power source to the various circuits of the telephone. When the remaining voltage of the main battery drops below a preselected value, the auxiliary battery feeds a power source only to a transmitting section which consumes a great current while the main battery continuously feeds its power source to the other circuitry. In this configuration, the transmitting section can continue its operation without interruption, preventing talking from being interrupted.

Japanese laid-open patent application heisei 5-11603 discloses a cordless telephone including a battery and a spare battery. The battery usually feeds a power source to the various circuits of the telephone. When the remaining voltage of the battery drops below a preselected value, an LED (Light Emitting Diode) mounted on the telephone blinks. When the user of the telephone notices the LED blinking and operates a switch, the spare battery is substituted for the above battery and feeds a power source to the various circuits of the telephone. This is also successful to prevent talking from being interrupted due to the short remaining voltage of the battery.

In these art, the spare battery is included in the telephone, or the alarm for the user is outputted.

On the other hand, a portable telephone selectively connectable to either one of two different communication systems has been proposed. For example, in a cordless telephone system including a master unit and a slave unit, the slave unit may be implemented as a mobile station connectable to a base station by radio.

### SUMMARY OF THE INVENTION

It is therefore an object of the present invention to provide an improved communication apparatus applicable to a plurality of different communication systems.

It is another object of the present invention to provide a communication apparatus capable of extending a receipt stand-by time, as mentioned below.

It is still another object of the present invention to provide a communication apparatus capable of automatically switching a plurality of different communication systems while a receipt stand-by.

It is yet another object of the present invention to provide a communication apparatus capable of selecting optimal one of a plurality of different communication systems when the user of the apparatus performs a call originating operation.

It is a further object of the present invention to provide a communication apparatus capable of reducing the interruption of talking and enhancing easy operation.

In accordance with the present invention, a communication apparatus includes a selector for selecting one of a plurality of communication systems to which the communication apparatus is connectable, a battery voltage detector for detecting a battery voltage driving the communication apparatus, and a controller for controlling the selector in accordance with the battery voltage detected by the battery voltage detector.

In accordance with the present inventon, a communication apparatus includes a first communication system, a second communication system, a battery voltage detector for detecting a battery voltage driving the communication apparatus, a comparing circuit for comparing the battery voltage detected by the battery voltage detector with a preselected value, and a switching circuit for effecting switching between the first and second communication systems when the battery voltage is lower than the preselected value.

In accordance with the present invention, a communication apparatus has a first and a second communication system, a voltage detector for detecting a battery voltage driving communication apparatus, a comparing circuit for comparing the battery voltage detected by the voltage detector with a preselected value, and a switching circuit for effecting switching between the first and second communication systems and the second communication system when the battery voltage is lower than the preselected value inclusive.

In accordance with the present invention, a communication apparatus includes at least one of a first and a second communication system, a battery voltage detector for detecting a battery voltage driving the communication apparatus, and a selector for selecting, at the time of call origination, connectable one of the first and second communication systems on the basis of the battery voltage detected by the battery voltage detector.

In accordance with the present invention, a communication apparatus includes at least one of a first and a second communication system, a battery voltage detector for detecting a battery voltage driving the communication apparatus, a first decision circuit for determining whether or not a call is originated via the first communication system, a second decision circuit for determining, when the first decision means determines that a call is originated via the first communication system, whether or not the battery voltage is lower than a minimum voltage inclusive necessary for the communication apparatus to be connected via the first communication system, and a selector for selecting the second communication system when the second decision circuit determines that the battery voltage is lower than the minimum voltage inclusive.

In accordance with the present invention, a communication apparatus includes a selector for selecting connectable one of a plurality of communication systems, a detector for detecting information relating to the remaining capacity of a battery for driving the communication apparatus, and a controller for controlling the selector on the basis of the remaining capacity of the battery determined by the detector.

In accordance with the present invention, a communication apparatus includes a first radio section for receiving a radio signal via a first communication system, a second radio section for receiving a radio signal via a second communication system, a selector for selecting at least one of the first and second radio sections, a battery for driving the communication apparatus, a detector for detecting the remaining capacity of the battery, a CPU (Central Processing Unit) for controlling the selector on the basis of the remaining capacity of the battery detected by the detector, and a notifying alerting section for producing an alert when the first and second radio sections receive radio signals.

In accordance with the present invention, a communication apparatus includes at least one of a first and a second communication system, a battery voltage detector for detecting a battery voltage driving the communication apparatus, and a selector for selecting, at the time of call origination, connectable one of the first and second communication systems on the basis of the battery voltage detected by the battery voltage detector.

In accordance with the present invention, a communication apparatus includes at least one of a first and a second communication system, a battery voltage detector for detecting a battery voltage driving the communication apparatus, a first decision circuit for determining whether or not a call originating operation has been performed via the first communication system, a second decision circuit for determining, when the first decision circuit determines that the call originating operation has been performed, whether or not the battery voltage is lower than a minimum voltage inclusive with which the first communication is connectable, and a selector for selecting the second communication system when the second decision circuit determines that the battery voltage is lower than the minimum voltage inclusive.

In accordance with the present invention, a method of switching the system of a communication apparatus has the steps of starting receipt stand-by via a first communication system, detecting a battery voltage driving the communication apparatus, comparing the battery voltage detected with a preselected value, and replacing, based on the result of comparison, the first communication system with a second communication system.

In accordance with the present invention, a method of switching the system of a communication apparatus has the steps of detecting a battery voltage driving the communication apparatus, comparing the battery voltage detected with a first preselected value, starting receipt stand-by via a first communication system when the battery voltage is higher than the first preselected value, determining whether or not the battery voltage is lower than the first preselected value inclusive, replacing, when the battery voltage is lower than the first preselected value inclusive, the first communication system with a second communication system, comparing the battery voltage with a second preselected value, and inhibiting said the and second communication systems from receipt stand-by when the battery voltage is lower than the second preselected value inclusive.

In accordance with the present invention, a method of switching the system of a communication apparatus has the steps of starting receipt stand-by via at least one of a first and a second communication system, detecting a battery voltage driving the communication apparatus, and connecting, at the time of call origination, the communication apparatus via connectable one of the first and second communication systems on the basis of the battery voltage detected.

In accordance with the present invention, a method of switching the system of a communication apparatus has the steps of starting receipt stand-by via at least one of a first and a second communication system, detecting a battery voltage driving the communication apparatus, determining whether a call originating operation has been performed via the first communication system, determining, when the call originating operation has been performed, whether or not the battery voltage is lower than a minimum voltage inclusive with which the first communication system is connectable, and connecting the communication apparatus via said second communication system when the battery voltage is lower than the minimum voltage inclusive.

In summary, it will be seen that the present invention provides a communication apparatus capable of switching, when a battery voltage thereof drops to a preselected value in a receipt stand-by state, a communication system to one consuming less current and thereby extending a receipt stand-by time. The apparatus is easy to operate because it automatically switches a plurality of different communication systems in accordance with the battery voltage. When the battery voltage is low at the time of call origination, the apparatus automatically selects a communication system consuming less current and thereby prevents call connection from being abruptly ended. In addition, at the time of call origination, the apparatus automatically selects a communication system consuming less current so as to further promote easy operation.

### BRIEF DESCRIPTION OF THE DRAWINGS

These and other objects, features and advantages of the present invention will become more fully apparent from the following detailed description taken in conjunction with the accompanying drawings in which:
Fig. 1 shows a relation between a portable telephone embodying the present invention and a PDC (Personal Digital Cellular) system and a PHS (Personal Handy phone System) to which the telephone is selectively connectable;
Fig. 2 is a block diagram schematically showing a preferred configuration of the portable telephone embodying the present invention;
Fig. 3 is a flowchart demonstrating a preferred operation of the telephone of Fig. 2 to occur in a receipt stand-by state;
Fig. 4 shows a relation between a battery voltage and a receipt stand-by time in a preferred condition wherein the PDC system and PHS consume the same current and have the same minimum voltage and when the telephone starts receipt stand-by with the PDC system after power-up;
Figs. 5a-5c respectively show the variation of the battery voltage and the operations of a PDC and a PHS radio section included in the illustrative embodiment and based on the relation shown in Fig. 4;
Fig. 6 shows a relation between the battery voltage and the receipt stand-by time in a preferred condition wherein the PDC system and PHS consume the same current and have the same minimum voltage and when the telephone starts receipt stand-by with the PHS after power-up;
Figs. 7a-7c respectively show the variation of the battery voltage and the operations of the PDC and PHS radio section included in the illustrative embodiment and based on the relation shown in Fig. 6;
Fig. 8 shows a relation between the battery voltage and the receipt stand-by time in a preferred condition wherein the PDC system and PHS consume the same current and have the same minimum voltage and when the telephone starts receipt stand-by with both of the PDC system and PHS after power-up;
Figs. 9a-9c respectively show the variation of the battery voltage and the operations of the PDC and PHS radio section included in the illustrative embodiment and based on the relation shown in Fig. 8;
Fig. 10 shows a relation between the battery voltage and the receipt stand-by time in a preferred condition wherein the PDC system and PHS are identical in current consumption, but different in minimum voltage;
Fig. 11 shows a relation between the battery voltage and the receipt stand-by time in a preferred condition wherein the PDC system and PHS are different in both of current consumption and minimum voltage;
Figs. 12a-12d show preferred conditions of display of the LCD 10 shown in Fig. 2;
Figs. 13-15 are flowcharts demonstrating preferred operations to occur in a receipt stand-by state, at the time of call origination and during talking and representative of an alternative embodiment of the present invention;
Fig. 16 shows a relation between the battery voltage and the receipt stand-by time for describing the embodiment of Fig. 13 more specifically;
Fig. 17 shows a relation between the battery voltage and the receipt stand-by time for describing a preferred operation of the embodiment of Figs. 14 and 15 to occur at the time of call origination and during talking;
Fig. 18 is a flowchart showing a preferred operation of the alternative embodiment to occur in response to a call incoming; and
Figs. 19a-20c show preferred conditions of display of the LCD 10 shown in Fig. 2.

### DETAILED DESCRIPTION OF THE PREFERRED EMBODIMENTS

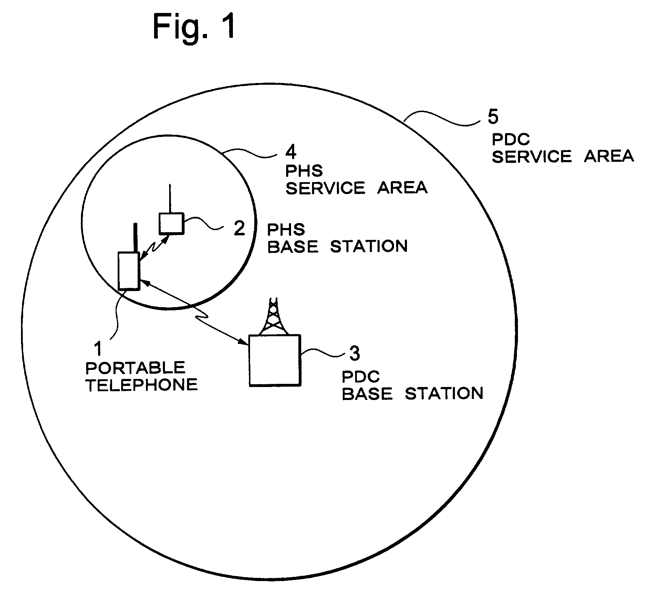

Referring to Fig. 1 of the drawings, a communication apparatus embodying the present invention is shown and implemented as, but not limited to, a portable telephone 1 connectable to a plurality of different communication systems, e.g., a PDC system and a PHS. As shown, a PDC base station 3 covers a PDC service area 5 having a radius of several kilometers while a PHS base station 2 covers a service area 4 having a radius of several hundred meters. The PDC and PHS differ from each other in current to consume in each of a receipt stand-by state, a call origination state and a talking state. Specifically, the PDC consumes a mean current of 1.5 mA in its receipt stand-by state and consumes a mean current of 300 mA in its talking state. On the other hand, the PHS consumes a mean current of 55 µA in its receipt stand-by state and consumes a mean current of 450 µA in its talking state. Generally, the PDC consumes more current than the PHS. Therefore, when the battery voltage of the telephone 1 drops to a preselected value in its PDC stand-by state, the telephone 1 is switched from the PDC to the PHS in order to extend the stand-by time available therewith.

In the present invention, the word "stand-by" means that the portable telephone 1 is waiting for a radio signal from the PHS base station 2 or the PDC base station 3 after the power-up of the telephone 1.

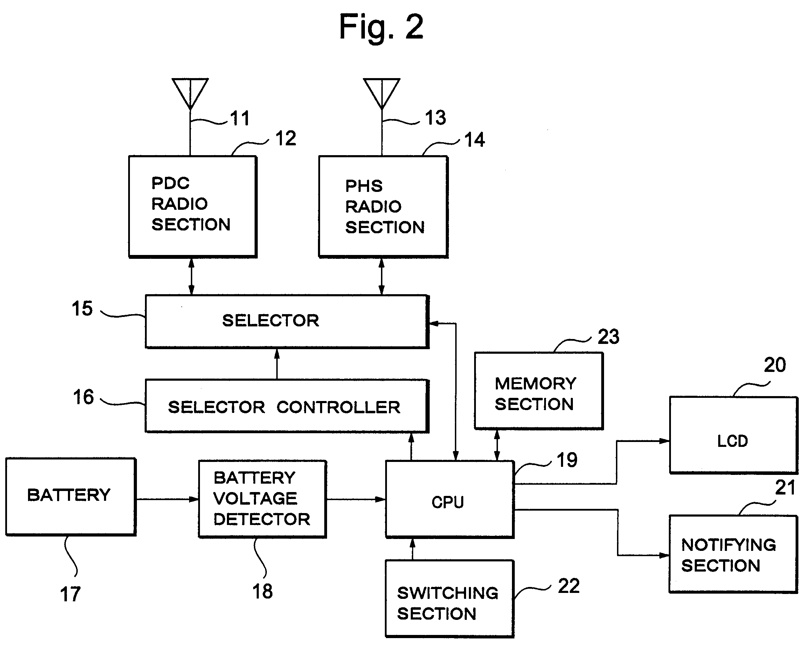

Fig. 2 shows a preferred configuration of the above telephone 1. As shown, the telephone 1 includes a PDC radio section 12 and a PHS radio section 14. The PDC radio section 12 receives a radio signal sent from the PDC base station 3, Fig. 1, via an antenna 11. Likewise, the PHS radio section 14 receives a radio signal sent from the PHS base station 2, Fig. 1, via an antenna 13. A selector 15 selects one or both of the PDC radio section 12 and PHS radio section 14 under the control of a selector controller 16. While a battery 17 feeds a power source to various sections of the telephone 1, power supply circuitry is not shown in order to facilitate an understanding of the illustrative embodiment. The battery 17 may be implemented by a lithium (Li) ion battery by way of example. The Li ion battery 17 has a voltage V₀ of, e.g., about 3.75 V for a cell when fully charged. A battery voltage detector 18 detects a battery voltage V on the basis of a current output from the battery 17. A memory section 23 stores a program for causing PDC communication system and PHS communication system to operate, a program for causing the entire telephone to operate, a first to an eighth preselected value which will be described, and so forth.

A CPU (Central Processing Unit) 19 controls the selector controller 16 on the basis of the battery voltage V output from the battery voltage detector 18. Also, the CPU 19 controls the PDC communication system and PHS communication system as well as the entire telephone 1. For the CPU 19, use may be made of µPD78001B available from NEC Corporation by way of example. An LCD (Liquid Crystal Display) 20 displays, under the control of the CPU 19, a communication system in the waiting state, remaining battery capacity, and so forth. A notifying section 21 notifies, under the control of the CPU 19, when the communication system is switched in the waiting state, the user of the telephone 1 to the switchover. The notifying section 21 should preferably be implemented by at least one of a speaker, an LED, and a vibrator. A switching section 22 is used for the initial setting of the communication systems, call origination, and so forth.

The radio signal received by the PDC radio section 12 and/or the radio signal received by the PHS radio section 14 is input to the CPU 19 via the selector 15 under the control of the selector controller 16. In response, the CPU 19 drives the LCD 20 and/or the notifying section 21 in order to notify the user to the call incoming. The notification ends when the user operates the switching section 22 or when a preselected period of time being counted by a timer, not shown, expires.

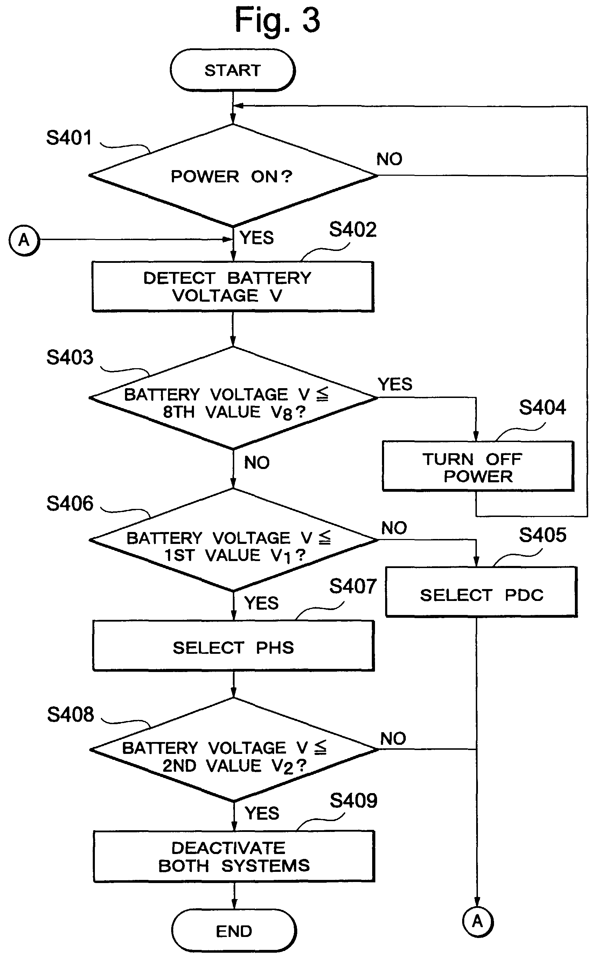

Reference will be made to Fig. 3 for describing a preferred operation of the telephone to occur when the telephone is starting receipt stand-by. In the following description, the PDC and PHS are assumed to be identical as to the minimum voltage necessary for the receipt stand-by state, but different from each other as to the current to consume in the stand-by state.

First, when the user operates the switching section 22, whether or not the telephone is power-up is determined (step S401). If the answer of the step S401 is positive (YES), then the battery voltage detector 18 detects the battery voltage V (step S402). Specifically, the detector 18 detects the battery voltage V every preselected period of time, e.g., every 1 millisecond after the power-up of the telephone. Whether or not the detected battery voltage V is lower than or equal to an eighth preselected value V₈ stored in the memory 23 is determined (step S403). The eighth preselected value V₈ is representative of a battery voltage V unable to maintain the telephone in its stand-by state and is, e.g., 2.5 V to 2.7 V. If the answer of the step S403 is YES, then the power supply of the telephone 10 is turned off (step S404).

If the battery voltage V is higher than the eighth value V₈ (NO, step S403), then whether or not the battery voltage V is lower than or equal to a first preselected value V₁ also stored in the memory 23 is determined (step S406). The first preselected value V₁ is slightly above the minimum voltage V₂ necessary for the telephone to remain in its PDC or PHS stand-by state and may be 3.3 V by way of example. If the battery voltage V is higher than the first preselected value V₁ (NO, step S406), then the PDC is selected (step S405). In this condition, the PDC radio section 12 can receive a radio signal, but the PHS radio section 14 cannot do so. Further, a call can be originated by the PDC system, but cannot be done so by the PHS system. However, when the user operates the switching section 22 in order to select a desired communication system, a call can be received or originated by any one of the different communication systems, as desired. The battery voltage detector 18 again detects the battery voltage V every preselected period of time, e.g., every 1 millisecond (step S410). If the battery voltage V is higher than the first preselected voltage V₁, then the PDC system is selected.

On the other hand, if the answer of the step S406 is YES, then the PHS is selected (step S407). That is, the communication system in the stand-by state is switched from the PDC to the PHS. At this instant, the voltage drop of the battery due to the internal resistance of the battery decreases because the PHS consumes less current than the PDC. As a result, the voltage at the battery terminal and therefore the battery voltage increases.

Subsequently, whether or not the battery voltage V is lower than or equal to a second preselected voltage V₂ stored in the memory 23, e.g., 3.2 V is determined (step S408). If the battery voltage V is higher than the second preselected value V₂ (NO, step S408), then the battery voltage detector 18 again starts detecting the battery voltage V every preselected period of time (step S411). If the answer of the step S408 is YES, then both the PDC system and PHS system are deactivated (step S409), i.e., the telephone cannot remain in the stand-by state either with the PDC system or with the PHS system.

In the preferred procedure shown in Fig. 3, the communication system may be switched when the user manipulates the switching section 22 in a particular manner. When the user turns off the power source of the telephone 1, the power supply is immediately cut off.

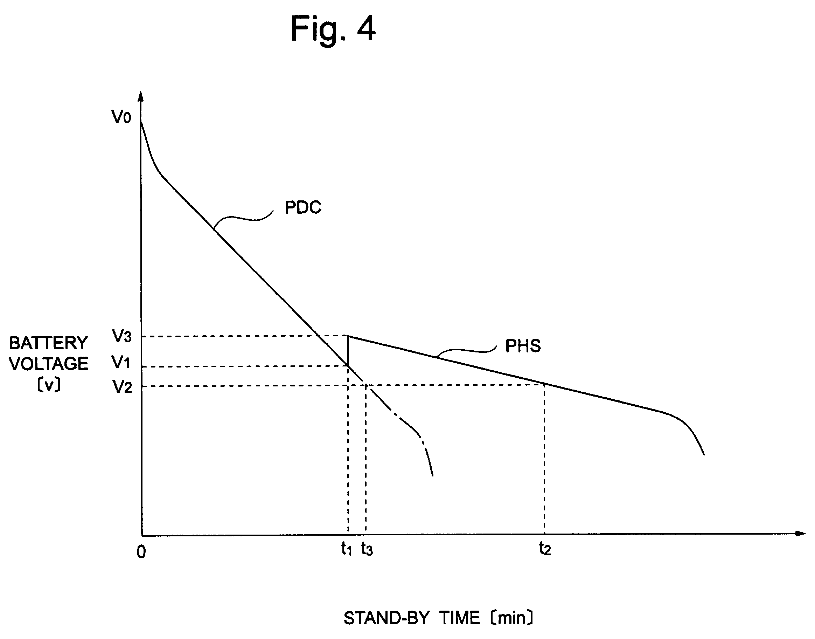

The above operation of the telephone 1 in the stand-by state will be described more specifically with reference to Fig. 4. In Fig. 4, assume that the battery voltage V is full when the power source of the telephone is turned on at a time 0. Fig. 4 shows a relation between the battery voltage V and the receipt stand-by time in a preferred condition wherein the PDC and PHS respectively consume a current of 500 mA and a current of 250 mA, and the battery 17 has a capacity of 500 mAh.

As shown in Fig. 4, when the power source is turned on at the time 0, the telephone starts receipt stand-by with the PDC system. When the battery voltage V reaches the first preselected value V₁ at a time t₁, the communication system in the stand-by state is automatically switched from the PDC to the PHS. In this condition, the telephone starts receipt incoming with the PHS, but cannot do so with the PDC. Because the PHS consumes less current than the PDC, the battery voltage increases from V₁ to V₃. As the battery voltage V reaches the second preselected voltage V₂ at a time t₂, the telephone 1 becomes unable to wait for a call incoming with both of the PDC and the PHS.

When the communication system is automatically switched at the time t₁, the noticing section 21 notifies the user of the replacement of the communication system. This notification should preferably be output in a different way from a notification representative of a call incoming, so that the user can surely recognize the switchover of the communication system. Further, a particular kind of notification should preferably be assigned to each communication system for distinction.

If desired, the LCD 20 may constantly display the PDC or the PHS being selected in the receipt stand-by state.

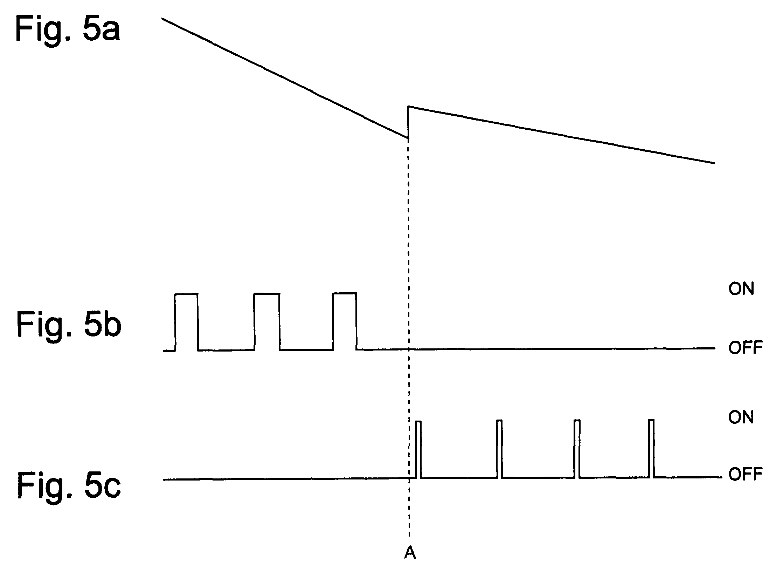

Figs. 5a-5c respectively show the variation of the battery voltage and the operations of the PDC radio section 12 and PHS radio section 14 occurring in accordance with the battery voltage. As shown in Fig. 5a, the battery voltage V drops to the first preselected value V₁ at a point A. Then, the communication system in the receipt stand-by state is automatically switched from the PDC to the PHS. Therefore, as shown in Fig. 5b, the PDC radio section 12 is periodically turned on every preselected period of time, e.g., every 720 millisecond, but is turned off at the point A. On the other hand, the PHS radio section 14 is turned off up to the point A, but is periodically turned on every preselected period of time, e.g., every 1.25 second from the point A.

Should the telephone continuously wait for a call incoming with the PDC without any system changeover, it would become unable to start receipt stand-by at a time t₃, e.g., in 30 minutes. By contrast, in the illustrative embodiment, the telephone 1 can remain in the receipt stand-by state until the time t₂, e.g., for 90 minutes. In this manner, the illustrative embodiment noticeably increases the receipt stand-by time available with the telephone.

In Figs. 3, 4 and 5a-5c, the telephone is assumed to start receipt stand-by with the PDC from the time of power-up to the time t₁. Alternatively, the telephone may start receipt stand-by with the PHS or with both of the PDC and PHS after the power-up. The user should preferably be allowed to select one or both of the systems on the switching section 22 beforehand.

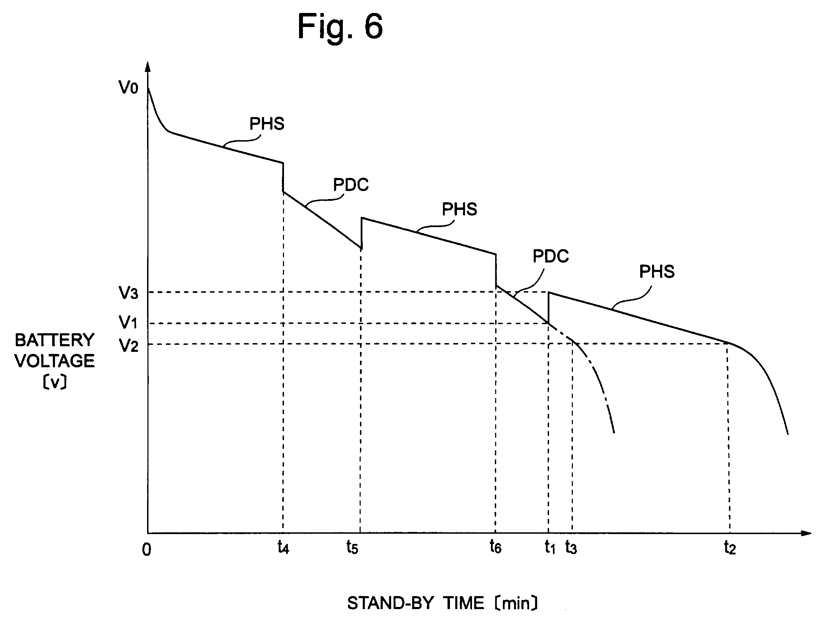

Fig. 6 shows a relation between the battery voltage V and the receipt stand-by time in another preferred condition wherein the telephone is first held in the PHS stand-by state after the power-up. As shown, when the power source is turned on at a time 0, the telephone starts receipt stand-by with the PHS up to a time t₄. At the time t₄, the communication system is automatically switched from the PHS to the PDC. At a time t₅, the communication system is again switched from the PDC to the PHS. Further, at a time t₆, the communication system is again switched from the PHS to the PDC. Assume that the battery voltage V reaches the first preselected value V₁ at a time t₁ while the PDC receipt stand-by state is set up. Then, the communication system is automatically switched from the PDC to the PHS, so that the telephone 1 starts receipt stand-by with the PHS. When the battery voltage V reaches the second preselected value V₂ at a time t₂, the telephone is unable to start receipt stand-by with both of the PDC and the PHS.

The system switchovers at the times t₄, t₅ and t₆ each should preferably be effected when, e.g., a preselected period of time expires or when the receipt field strength decreases. Further, the telephone 1 may be connected to the PHS when positioned in the PHS service area 4 or connected to the PDC when positioned in the PDC service area 5, so that priority is given to the PHS system in the receipt stand-by state.

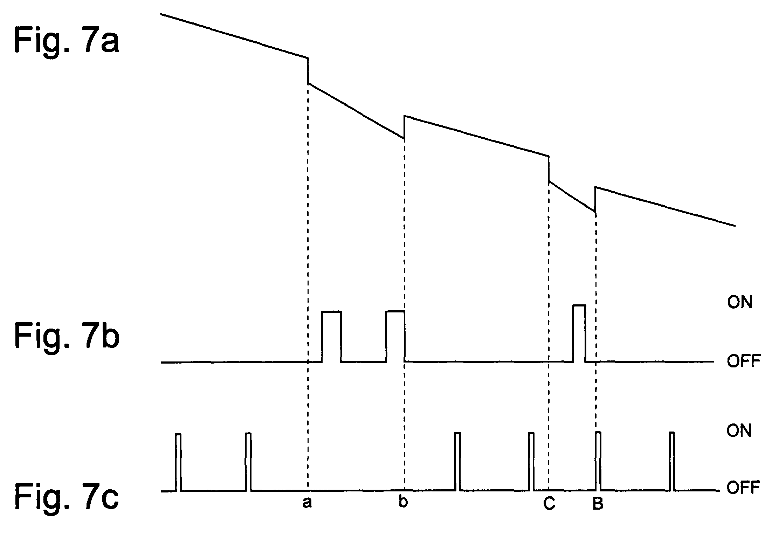

Figs. 7a-7c respective show the variation of the battery voltage and the operations of the PDC radio section 12 and PHS radio section 14 occurring in accordance with the battery voltage. As shown in Fig. 7a, assume that while the PDC receipt stand-by state is set up from a point *c*, the battery voltage V drops to the first preselected value V₁ at a point B. Then, the communication system is automatically switched from the PDC to the PHS. As a result, as shown in Fig. 7b, the PDC radio section 12 is periodically turned on from the point *c* to the point B every preselected period of time and then turned off after the point B. The PHS radio section 14 is turned off from the point *c* to the point B and then periodically turned on every preselected period of time after the point B.

Should the telephone continuously remain in the stand-by state with the PHS without any system changeover, it would become unable to remain in such a receipt stand-by state at a time t₃, e.g., in 80 minutes. By contrast, in the illustrative embodiment, the telephone 1 can remain in the stand-by state until the time t₂, e.g., for 90 minutes. In this manner, the illustrative embodiment increases the receipt stand-by time available with the telephone.

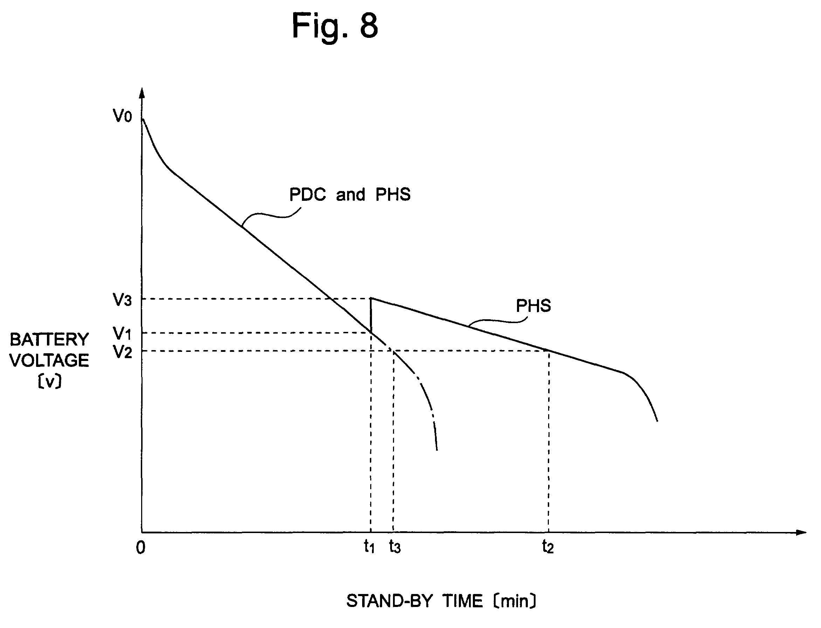

Fig. 8 shows a relation between the battery voltage V and the receipt stand-by time in a condition wherein the telephone 1 starts receipt stand-by with both of the PDC and PHS after the power-up. As shown, when the power source is turned on at a time 0, both the PDC and PHS are maintained active up to a time t₁. When the battery voltage V drops to the first preselected value V₁ at the time t₁, the PDC is deactivated, i.e., only the PHS is maintained active. Thereafter, the PDC receipt stand-by state cannot be restored. At a time t₂, the battery voltage V drops to the second preselected value V₂ with the result that the PHS is also deactivated. Even if the PDC and PHS consume the same current and have the same minimum voltage, the replacement of the combined PDC and PHS with the PHS only successfully reduces the load and thereby extends the receipt waiting time available with the telephone.

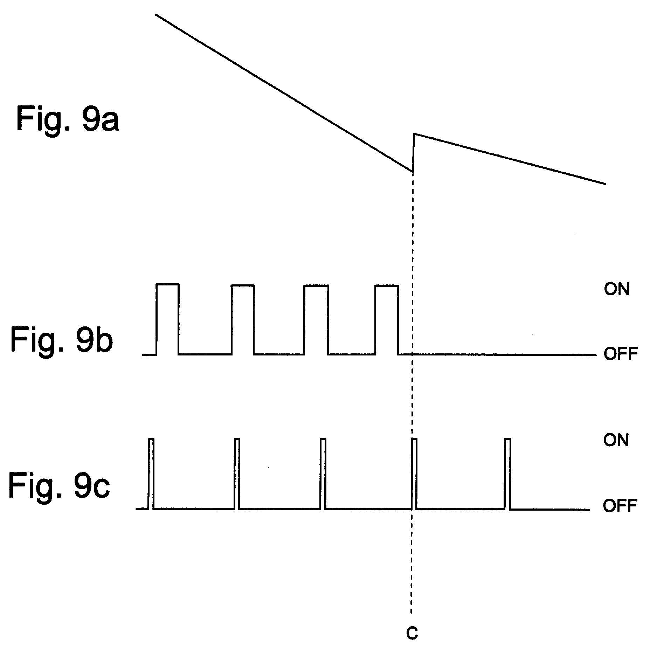

Figs. 9a-9c respective show the variation of the battery voltage and the operations of the PDC radio section 12 and PHS radio section 14 occurring in accordance with the battery voltage. As shown in Fig. 9a, assume that the battery voltage V drops to the first preselected value V₁ at a point A. Then, the communication system in the receipt stand-by state is automatically switched from the PDC and PHS to the PHS only. As a result, as shown in Fig. 9b, the PDC radio section 12 is periodically turned on at preselected intervals up to a point C and then turned off after the point C. On the other hand, as shown in Fig. 9c, the PHS radio section 14 is periodically turned on at preselected intervals from the time of power-up to the time when the telephone becomes practically unable to remain receipt stand-by.

Because the ON-OFF period of the PDC radio section 12 and that of the PHS radio section 14 are different from each other, it may occur that both the PDC radio section 12 and PHS radio section 14 are turned on at the same time. In such a case, both the PDC radio section 12 and PHS radio section 14 may happen to receive radio signals at the same time. Then, one of the radio signals is received by one of the communication system to which priority is given by the user. Specifically, when the user gives priority to the PDC, the CPU 19 processes the radio signal received via the PDC radio section 12 while neglecting the signal received via the PHS radio section 14. When the user gives priority to the PHS, the CPU 19 processes the radio signal received via the PHS radio section 14 while neglecting the signal received via the PDC radio section 12. When the user does not give priority to both of the communication systems, the CPU 19 processes the received signal with the initially set communication system.

Further, an arrangement may be made such that when both of the PDC radio section 12 and PHS radio section 14 receive radio signals at the same time, one of the communication systems having a greater received signal strength indicator (RSSI) at that time is activated. RSSI corresponds to a receipt field strength and is measured by each of the PDC and PHS every preselected period of time, e.g., every 5 millisecond in the receipt stand-by state of the telephone. For example, assume that when both the PDC radio section 12 and PHS radio section 14 receive radio signals at the same time, the PDC has a greater RSSI than the PHS. Then, the CPU 19 processes the signal input from the PDC radio section 12 while neglecting the radio signal input from the PHS radio section 14. On the other hand, when the PHS has a greater RSSI than the PDC, the CPU 19 processes the signal input from the PHS radio section 14 while neglecting the radio signal input from the PDC radio section 12. If the PDC and PHS have the same RSSI, then one of them set by the user beforehand or initially set is caused to receive the associated radio signal.

Moreover, when both the PDC radio section 12 and PHS radio section 14 receive radio signals at the same time, the CPU 19 may process one of the radio signals on the basis of a caller number received together with the radio signal. Specifically, if the received caller number is identical with any one of particular caller numbers input by the user beforehand, then the CPU 19 processes the radio signal received together with the caller number. If the caller number does not coincide with any one of the particular caller numbers, the CPU 19 does not process the radio signal received together with the caller number. On the other hand, when neither one of the caller numbers received via the PDC radio section 12 and PHS radio section 14 coincides with any one of the particular caller numbers or when both of them coincide with one of the particular caller numbers, the CPU 19 displays the caller numbers on the LCD 20 so as to urge the user to select one of them for talking. As a result, the CPU 19 processes the radio signal designated by the caller number selected by the user.

Should the telephone continuously remain receipt stand-by with both of the PHS and PDC without any system changeover, it would become unable to remain in such a stand-by state at a time t₃, e.g., in 50 minutes. By contrast, in the illustrative embodiment, the telephone can remain in the stand-by state until the time t₂, e.g., for 60 minutes. In this manner, the illustrative embodiment increases the receipt stand-by time available with the telephone.

In Figs. 4-9c, the PDC and PHS each is assumed to consume a different current while having the same minimum voltage which is the battery voltage V₂. The illustrative embodiment is similarly applicable to a case wherein a plurality of replaceable communication systems consume the same current, but are different in minimum voltage from each other. Also, the illustrative embodiment is applicable to a case wherein a plurality of communication systems are different in both of current consumption and minimum voltage from each other.

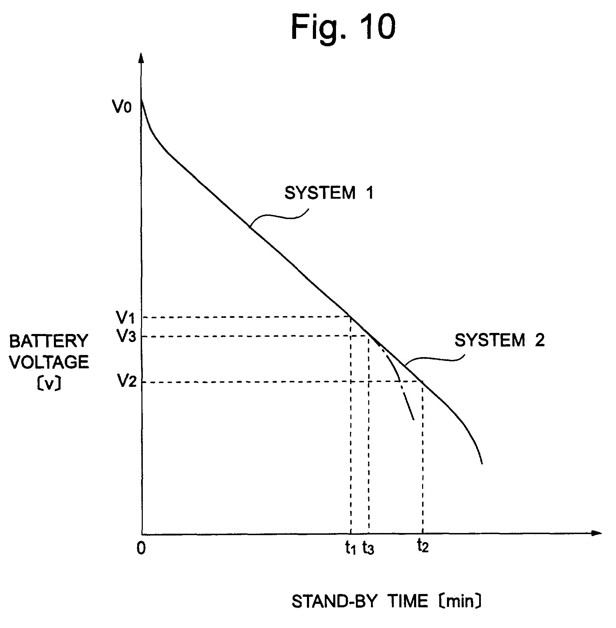

Fig. 10 shows a relation between the battery voltage and the receipt stand-by time in the condition wherein two systems 1 and 2 consume the same current, but each has a particular minimum voltage. As shown, the system 1 has a minimum voltage equal to a battery voltage V₃ while the system 2 has a minimum voltage equal to a battery voltage V₂. When the power source is turned on at a time 0, the system 1 is activated and starts receipt stand-by. When the battery voltage V reaches a first preselected value V₁ at a time t₁, the communication system in the stand-by state is automatically switched from the system 1 to the system 2. At this instant, the system 2 consumes the same current as the system 1, so that the battery voltage does not increase. Thereafter, when the battery voltage V drops to a second preselected value V₂ at a time t2, both the system 1 and system 2 are deactivated and cannot starts receipt stand-by.

Should the telephone continuously remain receipt stand-by with the system 1 without any system changeover, it would become unable to remain in such a stand-by state at a time t₃, e.g., in 30 minutes. By contrast, in the illustrative embodiment, the telephone can remain in the stand-by state until the time t₂, e.g., for 45 minutes. In this manner, the illustrative embodiment increases the receipt stand-by time available with the telephone despite that the systems 1 and 2 are different in minimum voltage from each other.

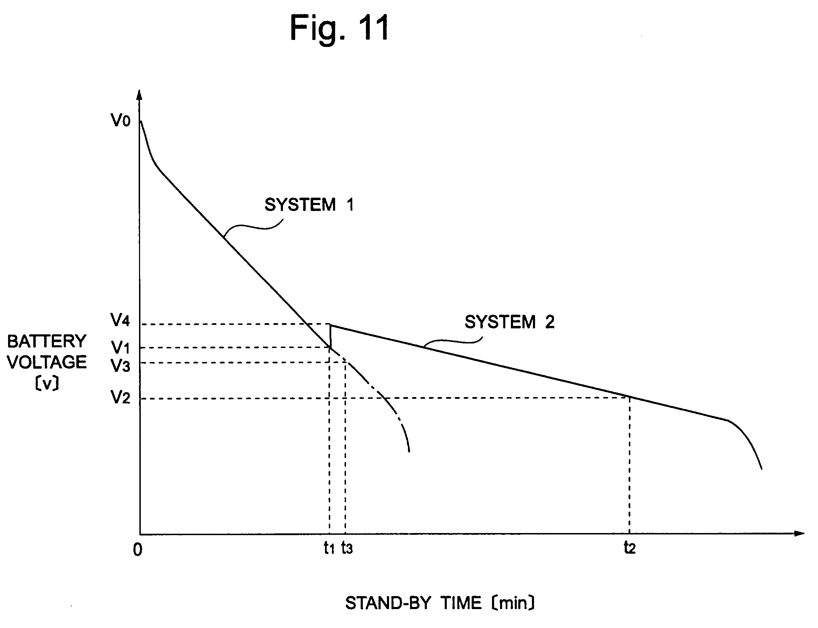

Fig. 11 shows a relation between the battery voltage and the receipt stand-by time in the condition wherein two systems 1 and 2 are different from each other in both of current consumption and minimum voltage. As shown, the system 1 has a minimum voltage equal to a battery voltage V₃ while the system 2 has a minimum voltage equal to a battery voltage V₂. When the power source is turned on at a time 0, the system 1 is activated and starts receipt incoming. When the battery voltage V reaches a first preselected value V₁ at a time t₁, the communication system in the stand-by state is automatically switched from the system 1 to the system 2. At this instant, because the system 2 consumes less current than the system 1, the battery voltage increases from V₁ to V₄. Subsequently, when the battery voltage V drops to a second preselected voltage V₂, both the system 1 and system 2 are deactivated and cannot start receipt stand-by.

Should the telephone continuously remain receipt stand-by with the system 1 without any system changeover, it would become unable to remain in such a stand-by state at a time t₃, e.g., in 30 minutes. By contrast, in the illustrative embodiment, the telephone can remain in the stand-by state until the time t₂, e.g., for 120 minutes. In this manner, the illustrative embodiment increases the receipt stand-by time available with the telephone despite that the systems 1 and 2 are different from each other in both of current consumption and minimum voltage.

As stated above, the illustrative embodiment automatically switches, in the receipt stand-by state, a plurality of communication systems in accordance with the measured battery voltage without regard to the current consumption or minimum voltage of the individual system, thereby extending the receipt stand-by time to a considerable degree.

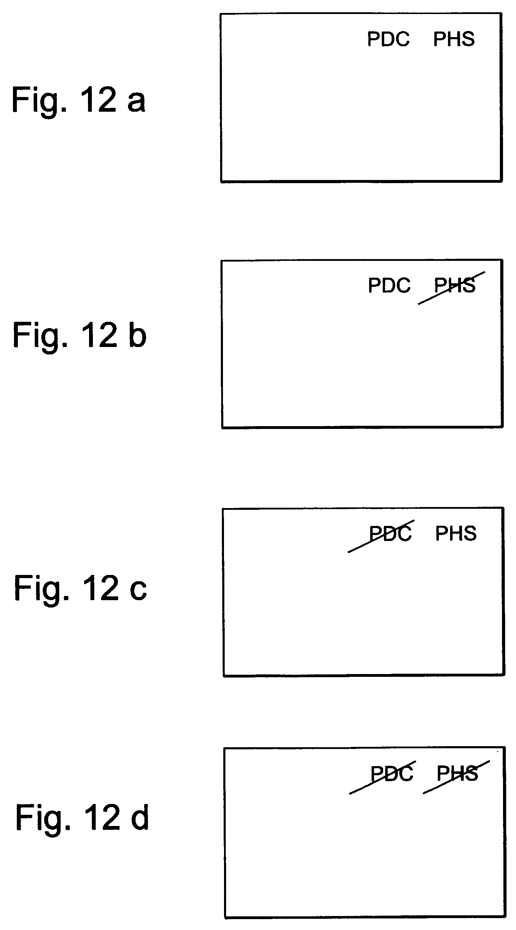

As shown in Figs. 12a-12d, the communication system or systems remain receipt stand-by may be displayed on the LCD 20, so that the user can recognize them. Fig. 12a shows the LCD 20 in a preferred condition wherein both the PDC and PHS remain receipt stand-by, shown in Fig. 8. Fig. 12b shows the LCD 20 in a preferred condition wherein only the PDC remains receipt stand-by, shown in Figs. 4 and 6. Fig. 12c shows a preferred condition wherein the PHS remain receipt stand-by, shown in Fig. 4, 6 and 8. Further, Fig. 12d shows the LCD 20 in a preferred condition wherein none of the PDC and PHS remains receipt stand-by, shown in Fig. 4, 6 and 8.

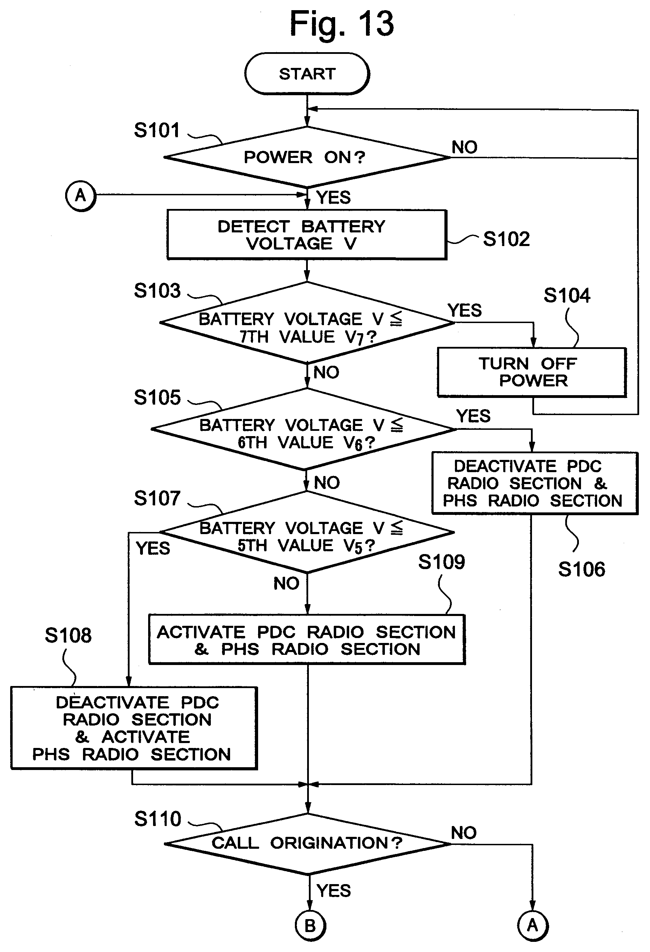

Reference will be made to Figs. 13-15 for describing a preferred operation of an alternative embodiment of the present invention, preferably a portable telephone, to occur at the time of call origination and talking. The relation between the portable telephone and the communication systems, e.g., PDC and PHS shown in Fig. 1 and the specific configuration of the telephone shown in Fig. 2 also apply to this embodiment and will not be described in order to avoid redundancy. In Figs. 13-15, the PDC and PHS are assumed to be different from each other in minimum voltage necessary for connection. For example, assume that the PDC and PHS have a minimum voltage V₇ of 3.63 V and a minimum voltage V₈ of 3.57 V, respectively.

As shown in Fig. 13, when the user operates the switching section 22, whether or not the telephone is power-up is determined (step S101). If the answer of the step S101 is YES, then the battery voltage detector 18 detects the battery voltage V (step S102). Specifically, the detector 18 detects the battery voltage V every preselected period of time, e.g., every 1 millisecond after the power-up of the telephone. Whether or not the detected battery voltage V is lower than or equal to a seventh preselected value V₇ is determined (step S103). The seventh preselected value V₇ is representative of a battery voltage V unable to maintain the telephone in its receipt stand-by state and is, e.g., 2.5 V to 2.7 V. If the answer of the step S103 is YES, the power supply of the telephone 10 is turned off (step S104).

If the battery voltage V is higher than the seventh value V₇ (NO, step S103), then whether or not the battery voltage V is lower than or equal to a sixth preselected value V₆ is determined (step S105). The sixth preselected value V₆ is slightly above the minimum voltage V₈ necessary for the telephone to be connected to the PHS and may be 3.58 V by way of example. If the battery voltage V is lower than or equal to the sixth preselected voltage V₆ (YES, step S105), then both the PDC radio section 12 and PHS radio section 14 are deactivated (step S106).

If the battery voltage V is higher than the sixth preselected voltage V₆ (NO, step S105), then whether or not the battery voltage V is lower than or equal to a fifth preselected voltage V₅ is determined (step S107). The fifth preselected voltage V₅ is slightly above a battery voltage necessary for the telephone to be connected to the PDC and may be, e.g., 3.64 V. If the answer of the step S107 is YES, the PDC radio section 12 is deactivated while the PHS radio section 14 is activated (step S108).

If the battery voltage V is higher than the fifth preselected voltage V₅
(NO, step S107),then both the PDC radio section 12 and PHS radio section 14 are activated.

Subsequently, whether or not the user has input, e.g., the telephone number of a desired destination on the switching section 22 to originate a call is determined (step S110). If the answer of the step S110 is NO, then the program returns to the step S102 for detecting the battery voltage V.

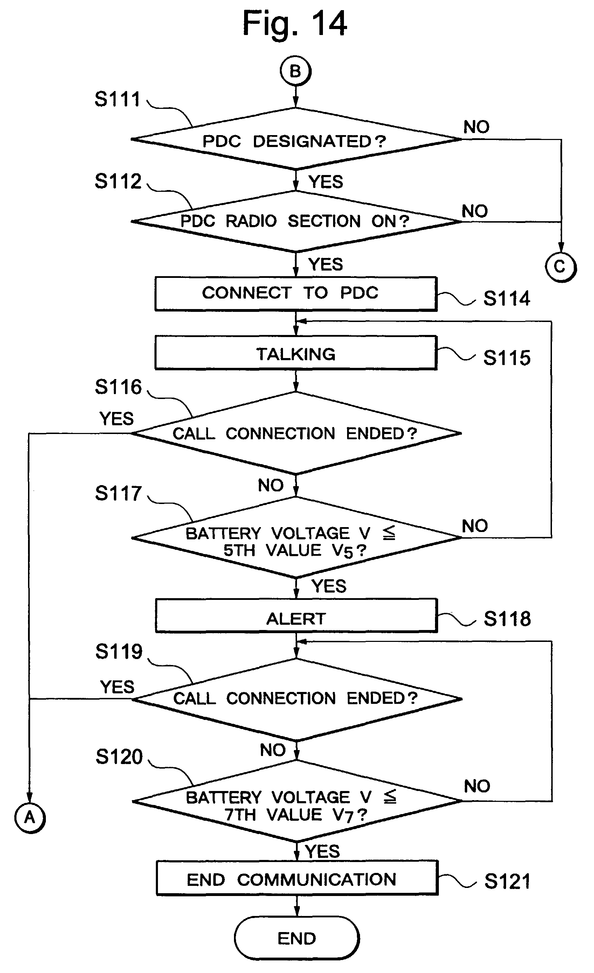

If the answer of the step S110 is YES, then as shown in Fig. 14, whether or not the PDC is designated is determined (step S111). For example, whether or not the PDC should be automatically designated at the time of call origination, as selected by the user beforehand, is determined. Alternatively, if the user can select a desired system on the switching section 22 at the time of call origination, then whether or not the user has manipulated the switching section 22 for connecting the telephone 1 to the PDC may be determined.

If the answer of the step S111 is YES, then whether or not the PDC radio section 12 is active is determined (step S112). If the answer of the step S112 is YES, then the telephone 1 is connected to the PDC (step S114), and talking is held on the telephone (step S115). Subsequently, whether or not the call connection has ended is determined (step S116). If the answer of the step S116 is NO, then whether or not the battery voltage V is lower than or equal to the fifth value V₅ is determined (step S117). If the answer of the step S117 is NO, then the steps S115 and S116 are repeated until the battery voltage V becomes lower than or equal to the fifth value V₅.

If the battery voltage V is lower than or equal to the fifth value V₅ (YES, step S117), then the notifying section 21 produces an alert (S118). Again, whether or not the call connection has ended is determined (step S119). If the answer of the step S119 is NO, then whether or not the battery voltage V is lower than or equal to the seventh preselected value V₇ is determined (step S120). If the battery voltage V is higher than the seventh value V₇ (NO, step S120), then the step S119 is repeatedly determined until the battery voltage V becomes lower than or equal to the seventh value V₇.

If the battery voltage V is lower than or equal to the seventh value V₇ (YES, step S120), then the call connection on the telephone 1 is forcibly ended (step S121).

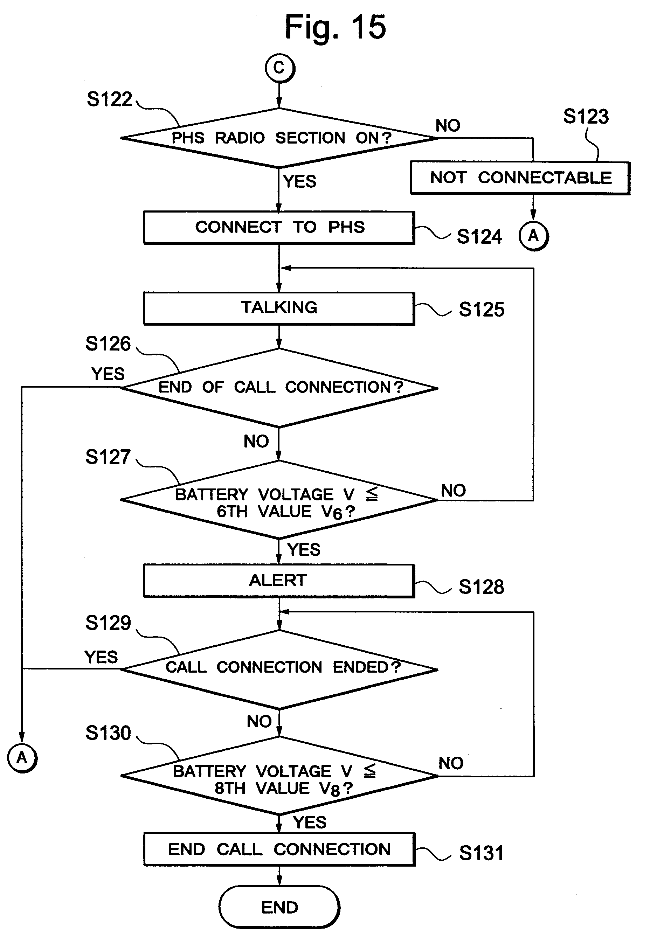

If the user has not connected the telephone to the PDC (NO, step S111) or if the PDC radio section 12 is not active (NO, step S112), then whether or not the PHS radio section 12 is active is determined (step S122, Fig. 15), as shown in Fig. 15. If the answer of the step S122 is NO, then the program returns to the step S102 in order to detect the battery voltage V because the telephone 1 cannot be connected to the PHS. If the answer of the step S122 is YES, then the telephone 1 is connected to the PHS (step S124), and talking is held on the telephone 1 (step S125). Whether or not the call conversation has ended is determined (step S126). If the answer of the step S126 is NO, then whether or not the battery voltage V is lower than or equal to the sixth preselected value V₆ is determined (step S127). If the answer of the step S127 is NO, then the steps S125 and 126 are repeated until the battery voltage V becomes lower than or equal to the sixth value V₆.

If the battery voltage V is lower than or equal to the sixth value V₆ (YES, step S127), then the noticing section 21 produces an alart (step S128). Subsequently, whether or not the call connection has ended is determined (step S129). If the answer of the step S129 is NO, whether or not the battery voltage V is lower than or equal to the eighth preselected voltage V₈ is determined (step S130). If the answer of the step S130 is NO, then the step S129 is repeated until the battery voltage V becomes lower than or equal to the eighth value V₈. If the answer of the step S130 is YES, then the call connection on the telephone 1 is forcibly ended (step S131).

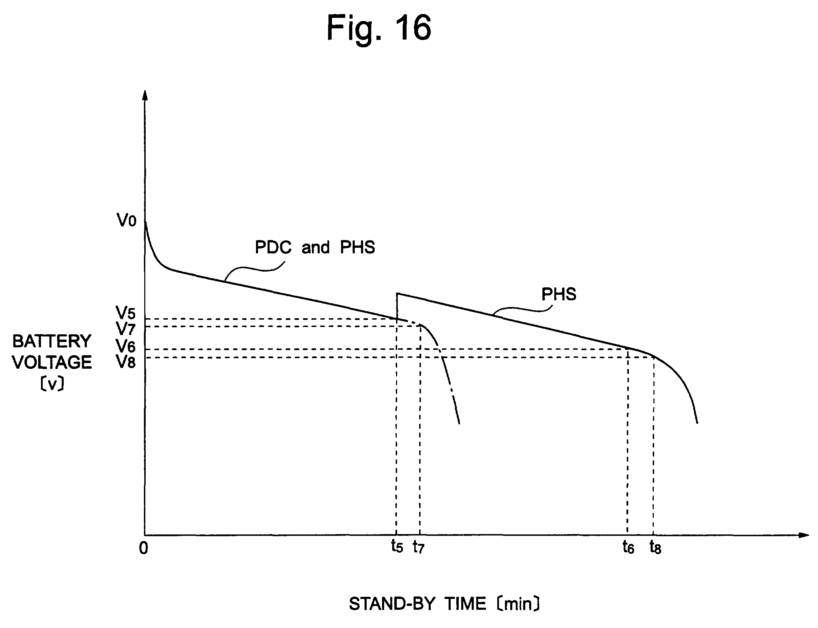

The above operation of the alternative embodiment will be described more specifically with reference to Fig. 16. Fig. 16 shows a relation between the battery voltage V and the receipt stand-by time. Assume that the battery voltage V is full when the power source of the telephone 1 is turned on at a time 0. In Fig. 16, battery voltages V₅, V₇ and V₈ should preferably be equal to the battery voltages V₁, V₃ and V₂ of Fig. 11, respectively.

As shown in Fig. 16, when the power source is turned on at a time 0, the battery voltage V is higher than the fifth preselected value V₅ because it is full. Therefore, both the PDC and PHS are maintained active. When the battery voltage V drops to the fifth preselected value V₅ at the time t₅, the PDC radio section 12 is deactivated, i.e., only the PHS is maintained active for receipt. At this instant, because the PHS consumes less current than the PDC, the battery voltage V increases from V₅. At a time t₆, the battery voltage V reaches the sixth preselected value V₆, the PHS communication system is also deactivated. The telephone 1 can therefore be connected to both of the PDC and PHS up to the stand-by time t₅. From the time t₅ to the time t₆, the telephone 1 can be connected to the PHS, but cannot be connected to the PDC. Further, after the time t₆, the telephone 1 cannot be connected to both of the PDC and PHS.

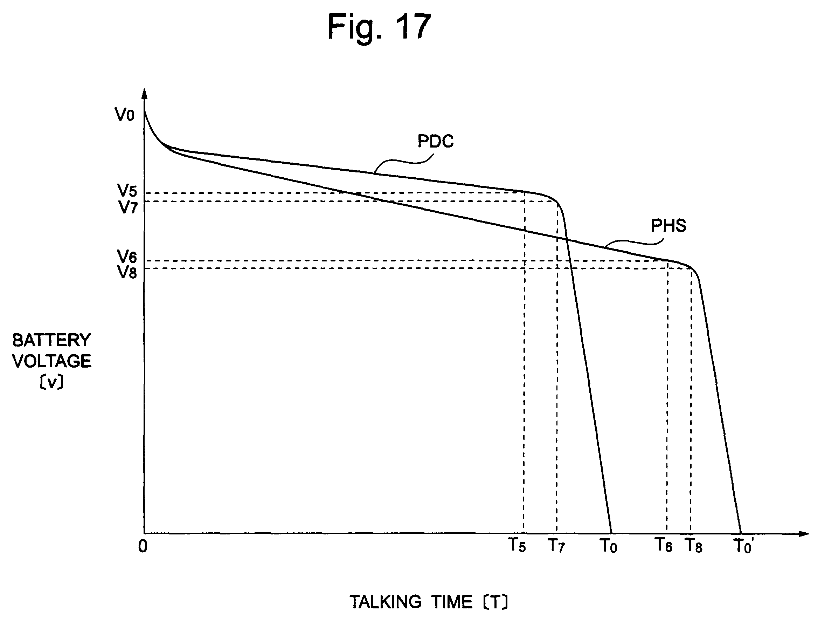

The operation of the above embodiment to occur at the time of call origination and during talking will be described more specifically with reference to Fig. 17. Fig. 17 shows a relation between the battery voltage V and the receipt stand-by time. Again, assume that the battery voltage V is full when a call is originated at a time 0. As shown, when the user operates the switching section 22 for originating a call and when the telephone 1 is connected to the PDC, the battery voltage V slowly drops up to a talking time T₇, e.g., up to 110 minutes and then sharply drops. The battery voltage V corresponding to the time T₇ is the seventh preselected value V₇. The battery voltage V drops to zero at a talking time T₀, e.g., in 120 minutes. Further, the battery voltage V corresponding to a talking time T₅,e.g., 105 seconds is the fifth preselected value V₅. It follows that when talking is held on the telephone 1 up to the time T₅, the notifying section 21 produces an alert. Subsequently, the call connection is forcibly ended at a talking time T₇, and the power source of the telephone 1 is turned off at a time T₀.

On the other hand, when the telephone 1 is connected to the PHS during talking, the battery voltage V slowly drops up to a talking time T₈, e.g., 170 minutes and then sharply drops. The power source voltage V corresponding to the time T₈ is the eighth preselected value V₈. The battery voltage V drops to zero at a talking time T₀', e.g., in 180 seconds. Further, the battery voltage V corresponding to a talking time T₆, e.g., 165 minutes is the sixth preselected value V₆. Therefore, when talking is held on the telephone 1 up to the time T₆, the notifying section 21 produces an alert. Subsequently, the call connection is forcibly ended at a talking time T₈, and the power source of the telephone 1 is turned off at a time T₀'.

The alerts produced at the times T₅ and T₆ may each be output in a particular way. Also, such alerts may be output from a speaker, not shown, instead of the alert 21 or may be output from both of the alert 21 and speaker.

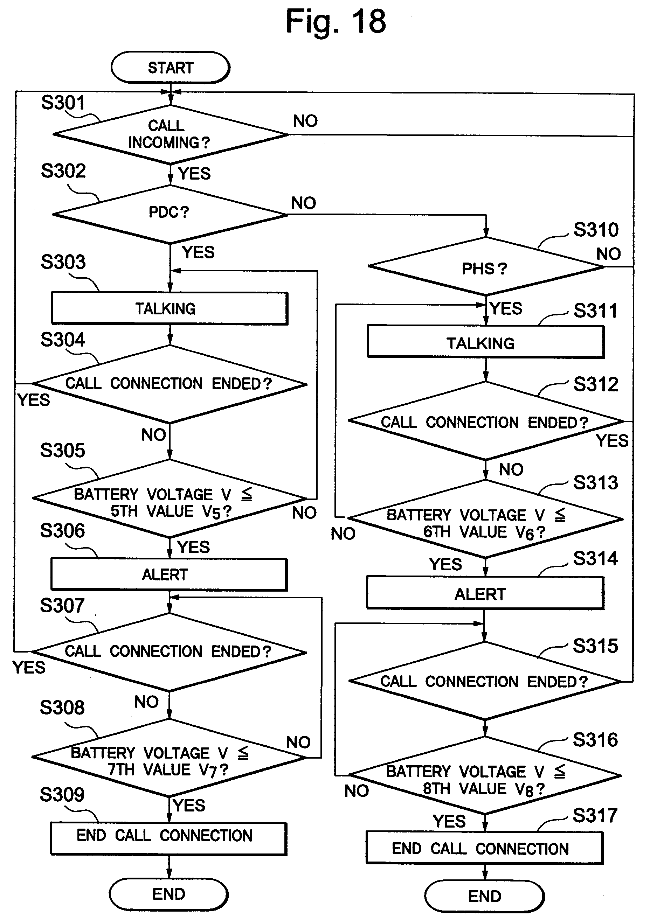

FIG. 18 demonstrates a preferred operation of the illustrative embodiment to occur in response to a call incoming. As shown, in response to a call incoming (YES, step S301), the CPU 19 determines which of the PDC radio section 12 and PHS radio section 14 has received a radio signal (step S302). Because the selector 15 has already selected connectable communication system in accordance with the battery voltage V, the radio section 12 or 14 assigned to the unconnectable communication system cannot receive any radio signal.

If the battery voltage V is higher than the fifth preselected value V₅, i.e., if both the PDC radio section 12 and PHS radio section 14 are active, the radio sections 12 and 14 may happen to receive radio signals at the same time. In such a case, one radio signal is received by the communication system to which priority is given by the user beforehand. Specifically, when the user gives priority to the PDC, the CPU 19 processes the radio signal received via the PDC radio section 12 while neglecting the signal received via the PHS radio section 14. When the user gives priority to the PHS, the CPU 19 processes the radio signal received via the PHS radio section 14 while neglecting the signal received via the PDC radio section 12. When the user does not give priority to both of the communication systems, the CPU 19 processes the received signal with the initially set communication system.

Further, an arrangement may be made such that when both the PDC radio section 12 and PHS radio section 14 receive radio signals at the same time, one of the communication systems having a greater RSSI at that time is activated. RSSI corresponds to a receipt field strength and is measured by each of the PDC and PHS every preselected period of time, e.g., every 5 milliseconds in the receipt stand-by state of the telephone, as stated earlier. For example, assume that when both the PDC radio section 12 and PHS radio section 14 receive radio signals at the same time, the PDC has a greater RSSI than the PHS. Then, the CPU 19 processes the signal input from the PDC radio section 12 while neglecting the radio signal input from the PHS radio section 14. On the other hand, when the PHS has a greater RSSI than the PDC, the CPU 19 processes the signal input from the PHS radio section 14 while neglecting the radio signal input from the PDC radio section 12. If the PDC and PHS systems have the same RSSI, then one of them set by the user beforehand or initially set is caused to receive the associated radio signal.

Moreover, when both the PDC radio section 12 and PHS radio section 14 receive radio signals at the same time, the CPU 19 may process one of the radio signals on the basis of a caller number received together with the radio signal. Specifically, if the caller number is identical with any one of particular caller numbers input by the user beforehand, then the CPU 19 processes the radio signal received together with the caller number. If the received caller number does not coincide with any one of the particular caller numbers, the CPU 19 does not process the radio signal received together with the caller number. On the other hand, when neither one of the caller numbers received via the PDC radio section 12 and PHS radio section 14 coincides with any one of the particular caller numbers or when both of them coincide with one of the particular caller numbers, the CPU 19 displays the caller numbers on the LCD 20 so as to urge the user to select one of them for conversation. As a result, the CPU 19 processes the radio signal designated by the caller number selected by the user.

Assume that the CPU 19 processes the radio signal input from the PDC radio section 12 (YES, step S302). Then, talking begins when the user presses the switching section 22 (step S303). The following steps S303-S309 to be executed during talking are identical with the steps S115-S121 of Fig. 14 and will not be described specifically in order to avoid redundancy.

Even when the CPU 19 processes the radio signal input from the PHS radio section 14 (NO, step S302 and YES, step S310), talking begins when the user presses the switching section 22 (step S311). The following steps S311-S317 are identical with the steps S125-S131 of Fig. 15 and will not be described specifically in order to avoid redundancy.

As stated above, in this embodiment, when the telephone 1 is connected to the PDC at the time of call origination, but the battery voltage V is short of one required of the PDC, the PDC is automatically replaced with the PHS for the origination of a call, promoting easy operation of the telephone 1. In addition, an alert is output a preselected period of time before the forced shut-down of call connection, preventing call connection from being abruptly ended.

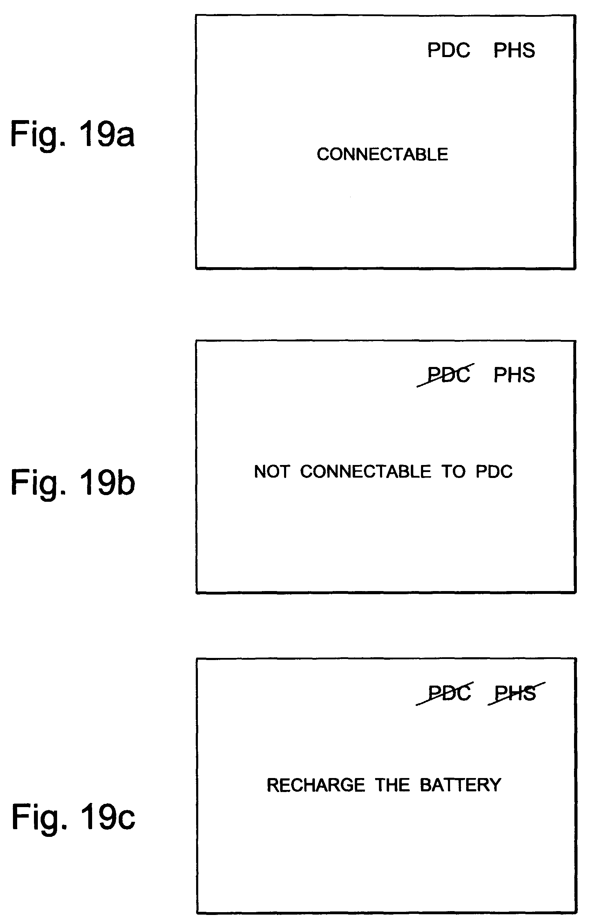

As shown in Figs. 19a-19c, the LCD 20 may display a connectable communication system or systems in order to allow the user to see the system or systems to which the telephone 1 can be connected. Fig. 19a shows the LCD 20 in a preferred condition wherein the telephone 1 is connectable to both the PDC and PHS. Fig. 19b shows the LCD 20 in a preferred condition wherein the telephone 1 is connectable to the PHS, but not connectable to the PDC. Fig. 19c shows the LCD 20 in a preferred condition wherein the telephone 1 is connectable neither to the PDC nor to the PHS. Messages, e.g., "Connectable" and "Not connectable to PDC" should preferably displayed on the LCD 20 in order to allow the user to see the connectable system or systems more clearly. When the telephone 1 is not connectable either to the PDC or to the PHS, a message, e.g., "Recharge the battery" for urging the user to recharge the battery 17, Fig. 2, should preferably be displayed on the LCD 20.

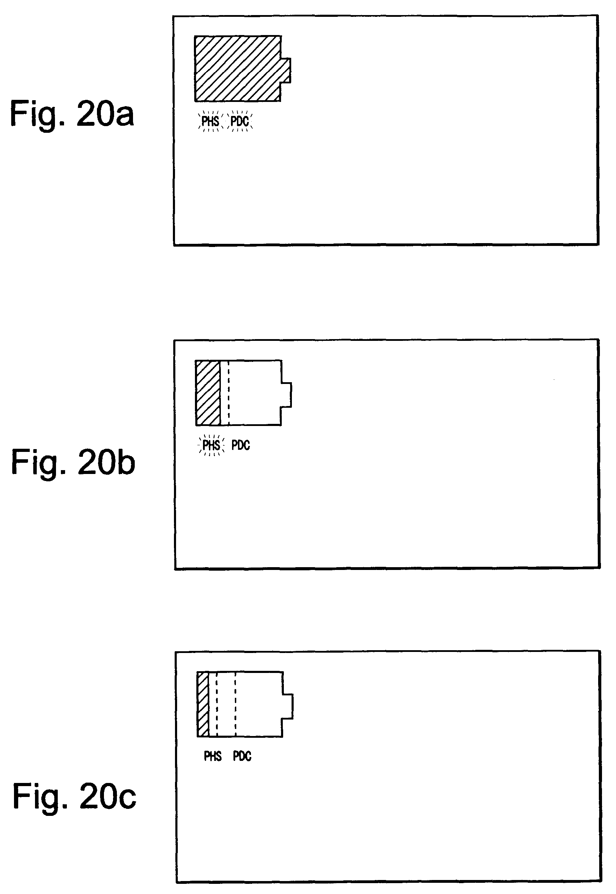

Further, as shown in Figs. 20a-20c specifically, the battery voltage V may be displayed on the LCD 20 together with the connectable communication system or systems. Fig. 20a shows a condition wherein the battery voltage V is full, and labels "PDC" and "PHS" both blinking to show that the telephone 1 is connectable to both of the PDC and PHS. Fig. 20b shows a condition where the battery voltage V is sufficient for connection of the telephone 1 to the PHS although not allowing it to be connected to the PDC by causing the label "PHS" to blink. Fig. 20c shows a condition wherein the battery voltage V does not allow the telephone 1 to be connected to both of the PDC and PHS; neither the label "PDC" nor the label "PHS" is blinking.

It may occur that when a call is originated on the telephone 1 via a desired communication system, the destination or called portable telephone cannot communicate with the telephone 1 via the above system because of short battery voltage. In light of this, a switching station should preferably control communication systems to which the individual portable telephones are connectable, and send to the calling station information representative of the communication system to which the called station can be connected. Such information should preferably be sent to the switching station from the individual portable telephone together with, e.g., a registration request signal.

While the embodiments shown and described each replaces the PDC and PHS, the present invention is, of course, applicable to any other communication systems, e.g., a GSM (Global System for Mobile communication) and PHS, a slave unit included in a cordless telephone system and a portable telephone, or a radio pager and a portable telephone. The pair of connectable communication systems is not limited the above pair of them. Further, the present invention is capable of dealing with three or more communication systems. For example, when the present invention is selectively deals with three different communication systems, two different preselected battery voltage values will be used, and the communication system will be switched two times in accordance with the current consumption and minimum voltage of the system.

The PDC radio section 12 and PHS radio section 14 are shown in Fig. 2 as being independent of each other, they may be constructed into a single radio section. In such a case, it is desirable that a part of the single radio section be switchable in order to implement call connection with particular power and a particular protocol matching with each communication system.

It is desirable that the user be capable of varying the preselected values by operating the switching section 22. Particularly, the fifth and sixth preselected values V₅ and V₆ of the alternative embodiment should preferably be variable in order to allow the user to vary the interval between the time when an alert is output and the time when call connection is forcibly ended. If desired, a greater number of preselected values may be set in order to output a greater number of alerts.

The illustrative embodiments each switches a plurality of communication systems, generates alerts and ends call connection on the basis of battery voltages detected by the battery voltage detector 18. Alternatively, the battery voltage detector 18 may calculate the remaining capacity of the battery 17, so that the above switchover, alert generation and call connection ending can be executed on the basis of the calculated capacity itself. In this sense, the detector 18 may detect any kind of information relating to the battery 17. The CPU 19 performs such operations on the basis of the information relating to the battery 17.

In summary, it will be seen that the present invention provides a communication apparatus capable of switching, when a battery voltage thereof drops to a preselected value in a receipt stand-by state, a communication system to one consuming less current and thereby extending a receipt stand-by time. The apparatus is easy to operate because it automatically switches a plurality of different communication systems in accordance with the battery voltage. When the battery voltage is low at the time of call origination, the apparatus automatically selects a communication system consuming less current and thereby prevents call connection from being abruptly ended. In addition, at the time of call origination, the apparatus automatically selects a communication system consuming less current so as to further promote easy operation.

Obviously, numerous additional modifications and variations of the present invention are possible in light of the above teachings. It is therefore to be understood that within the scope of the appended claims, the invention may be practiced otherwise than as specifically described herein.

## Claims

1. A communication apparatus comprising:
selecting means for selecting one of a plurality of communication systems to which said communication apparatus is connectable;
battery voltage detecting means for detecting a battery voltage driving said communication apparatus; and
control means for controlling said selecting means in accordance with the battery voltage detected by said battery voltage detecting means.

2. A communication apparatus comprising:
a first communication system;
a second communication system;
battery voltage detecting means for detecting a battery voltage driving said communication apparatus;
comparing means for comparing the battery voltage detected by said battery voltage detecting means with a preselected value; and
switching means for effecting switching between said first communication system and said second communication system when the battery voltage is lower than the preselected value.

3. An apparatus as claimed in claim 2, wherein said second communication system is capable of receipt stand-by with a voltage lower than the preselected value.

4. An apparatus as claimed in claim 2, wherein the preselected value is variable by a user of said apparatus.

5. An apparatus as claimed in claim 2, wherein the preselected value is greater than a minimum voltage necessary for said first communication system to start receipt stand-by.

6. An apparatus as claimed in claim 2, wherein said first and second communication systems are different in a current to consume, but are identical in a minimum voltage necessary for receipt stand-by.

7. An apparatus as claimed in claim 2, wherein said first and second communication systems are identical in a current to consume, but different in a minimum voltage necessary for receipt stand-by.

8. An apparatus as claimed in claim 2, wherein said first and second communication systems are different from each other in a current to consume and a minimum voltage necessary for receipt stand-by.

9. An apparatus as claimed in claim 2, wherein said switching means automatically effects switching between said first communication system and said second communication system.

10. An apparatus as claimed in claim 2, further comprising outputting means for outputting a speech when said first communication system is replaced with said second communication system.

11. An apparatus as claimed in claim 2, further comprising display means for displaying information relating to one of said first and second communication systems capable of receipt stand-by.

12. An apparatus as claimed in claim 2, wherein said first and second communication systems comprise a PDC system and a PHS, respectively.

13. An apparatus as claimed in claim 2, wherein said first and second communication systems comprise a GSM and a PHS, respectively.

14. An apparatus as claimed in claim 2, wherein said first and second communication systems comprise a PDC system and a radio pager, respectively.

15. An apparatus as claimed in claim 2, wherein said first and second communication systems comprise a PHS and a radio pager, respectively.

16. A communication apparatus comprising:
a first and a second communication system;
battery voltage detecting means for detecting a battery voltage driving said communication apparatus;
comparing means for comparing the battery voltage detected by said battery voltage detecting means with a preselected value; and
switching means for effecting switching between said first and second communication systems and said second communication system when the battery voltage is lower than the preselected value inclusive.

17. An apparatus as claimed in claim 16, wherein said second communication system is capable of receipt stand-by with a lower voltage than the preselected value.

18. An apparatus as claimed in claim 16, wherein the preselected value is variable by a user of said apparatus.

19. An apparatus as claimed in claim 16, wherein the preselected value is greater than a minimum voltage necessary for said first communication system to start receipt stand-by.

20. An apparatus as claimed in claim 16, wherein said first and second communication systems are different in a current to consume, but are identical in a minimum voltage necessary for receipt stand-by.

21. An apparatus as claimed in claim 16, wherein said switching means automatically effects switching between said first and second communication systems.

22. An apparatus as claimed in claim 16, further comprising outputting means for outputting a speech when said first communication system is replaced with said second communication system.

23. An apparatus as claimed in claim 22, wherein the speech differs on the basis of the communication system to which is replaced.

24. An apparatus as claimed in claim 16, further comprising display means for displaying one or both of said first and second communication systems capable of receipt stand-by.

25. A communication apparatus comprising:
a first communication system;
a second communication system;
battery voltage detector for detecting a battery voltage driving said communication apparatus;
comparator for comparing the battery voltage detected by said battery voltage detector with a preselected value; and
switching circuit for effecting switching between said first communication system and said second communication system when the battery voltage is lower than the preselected value.

26. A communication apparatus comprising:
a first and a second communication system;
battery voltage detector for detecting a battery voltage driving said communication apparatus;
comparator for comparing the battery voltage detected by said battery voltage detector with a preselected value; and
switching circuit for effecting switching between said first and second communication systems and said second communication system when the battery voltage is lower than the preselected value inclusive.

27. A communication apparatus comprising:
at least one of a first and a second communication system;
battery voltage detecting means for detecting a battery voltage driving said communication apparatus; and
selecting means for selecting, at a time of call origination, a connectable one of said first and second communication systems on the basis of the battery voltage detected by said battery voltage detecting means.

28. A communication apparatus comprising:
at least one of a first and a second communication system;
battery voltage detecting means for detecting a battery voltage driving said communication apparatus;
first decision means for determining whether or not a call is originated via said first communication system;
second decision means for determining, when said first decision means determines that a call is originated via said first communication system, whether or not the battery voltage is lower than a minimum voltage inclusive necessary for said communication apparatus to be connected via said first communication system; and
selecting means for selecting said second communication system when said second decision means determines that the battery voltage is lower than the minimum voltage inclusive.

29. An apparatus as claimed in claim 28, wherein said first and second communication systems are different in a current to consume and a minimum voltage necessary for connection.

30. An apparatus as claimed in claim 28, further comprising connecting means for connecting said apparatus via said first communication system when said second decision means determines that the battery voltage is higher than the minimum voltage.

31. An apparatus as claimed in claim 28, further comprising outputting means for outputting, when said selecting means selects said second communication system, an alert when the battery voltage drops below a first preselected value.

32. An apparatus as claimed in claim 28, further comprising ending means for ending, when said selecting means selects said second communication system, communication when the battery voltage drops below a second preselected value.

33. An apparatus as claimed in claim 30, further comprising outputting means for outputting, when said connecting means connects said apparatus via said first communication system, an alert when the battery voltages drops below a third preselected voltage.

34. An apparatus as claimed in claim 30, further comprising ending means for ending, when said connecting means connects said apparatus via said first communication system, communication when the battery voltage drops below a fourth preselected value.

35. An apparatus as claimed in claim 28, further comprising receiving means for receiving, in response to a call incoming, a radio signal via a connectable one of said first and second communication systems on the basis of the battery voltage.

36. An apparatus as claimed in claim 28, further comprising display means for displaying information relating to a connectable at least one of said first and second communication systems.

37. An apparatus as claimed in claim 36, wherein said display means displays information relating to said connectable communication system at a same portion thereof as information relating to the battery voltage.

38. An apparatus as claimed in claim 28, wherein said first and second communication systems comprise a PDC system and a PHS, respectively.

39. An apparatus as claimed in claim 28, wherein said first and second communication systems comprise a GSM and a PHS, respectively.

40. An apparatus as claimed in claim 28, wherein said first and second communication systems comprise a PDC system and a radio pager, respectively.

41. An apparatus as claimed in claim 28, wherein said first and second communication systems comprise a PHS and a radio pager, respectively.

42. A communication apparatus comprising:
selecting means for selecting a connectable one of a plurality of communication systems;
detecting means for detecting information relating to a remaining capacity of a battery for driving said communication apparatus; and
control means for controlling said selecting means on the basis of the remaining capacity of said battery determined by said detecting means.

43. A communication apparatus comprising:
a first radio section for receiving a radio signal via a first communication system;
a second radio section for receiving a radio signal via a second communication system;
a selector for selecting at least one of said first and second radio sections;
a battery for driving said communication apparatus;
a detector for detecting a remaining capacity of said battery;
a CPU for controlling said selector on the basis of the remaining capacity of said battery detected by said detector; and
a notifying section for producing an alert when said first and second radio sections receive radio signals.

44. A communication apparatus comprising:
at least one of a first and a second communication system;
a battery voltage detector for detecting a battery voltage driving said communication apparatus; and
a selector for selecting, at a time of call origination, a connectable one of said first and second communication systems on the basis of the battery voltage detected by said battery voltage detector.

45. A communication apparatus comprising:
at least one of a first and a second communication system;
a battery voltage detector for detecting a battery voltage driving said communication apparatus;
a first decision circuit for determining whether or not a call originating operation has been performed via said first communication system;
a second decision circuit for determining, when said first decision circuit determines that the call originating operation has been performed, whether or not the battery voltage is lower than a minimum voltage inclusive with which said first communication is connectable; and
a selector for selecting said second communication system when said second decision circuit determines that the battery voltage is lower than the minimum voltage inclusive.

46. A method of switching a system of a communication apparatus, comprising the steps of:
starting receipt stand-by via a first communication system;
detecting a battery voltage driving said communication apparatus;
comparing the battery voltage detected with a preselected value; and
replacing, based on a result of comparison, said first communication system with a second communication system.

47. A method of switching a system of a communication apparatus, comprising the steps of:
detecting a battery voltage driving said communication apparatus;
comparing the battery voltage detected with a first preselected value;
starting receipt stand-by via a first communication system when the battery voltage is higher than the first preselected value;
determining whether or not the battery voltage is lower than the first preselected value inclusive;
replacing, when the battery voltage is lower than the first preselected value inclusive, said first communication system with a second communication system;
comparing the battery voltage with a second preselected value; and
inhibiting said first and second communication systems from receipt stand-by when the battery voltage is lower than the second preselected value inclusive.

48. A method of switching a system of a communication apparatus, comprising the steps of:
starting receipt stand-by via at least one of a first and a second communication system;
detecting a battery voltage driving said communication apparatus; and
connecting, at a time of call origination, said communication apparatus via a connectable one of said first and second communication systems on the basis of the battery voltage detected.

49. A method of switching a system of a communication apparatus, comprising the steps of:
starting receipt stand-by via at least one of a first and a second communication system;
detecting a battery voltage driving said communication apparatus;
determining whether a call originating operation has been performed via said first communication system;
determining, when the call originating operation has been performed, whether or not the battery voltage is lower than a minimum voltage inclusive with which said first communication is connectable; and
connecting said communication apparatus via said second communication system when the battery voltage is lower than the minimum voltage inclusive.

50. A method as claimed in claim 49, further comprising the steps of:
determining whether or not a call originating operation has been performed via said second communication system;
determining, when the call originating operation has been performed via said second communication system, whether or not the battery voltage is lower than a minimum voltage inclusive with which said second communication system is connectable; and
inhibiting connection via said second communication system when the battery voltage is lower than the minimum voltage inclusive.
